# EUROPEAN PATENT APPLICATION

(11) **EP 4 530 492 A1**
(43) Date of publication of application: **02.04.2025**
(21) Application number: 24202850.4
(22) Date of filing: 26.09.2024
(51) Int. Cl.: F16F 1/376, H01M 50/242, F16F 15/08

(54) **CUSHIONING SHEET**

(30) Priority: 27.09.2023 JP 2023164106
(71) Applicant: NOK Corporation, Tokyo 105-8585 (JP)
(72) Inventor: SHIMOOKA, Hiroyuki, Aso-shi, Kumamoto, 869-2231 (JP)
(74) Representative: TBK

(57) **Abstract**

A cushioning sheet (100, 100A) having an elastic body and including a flat plate (110, 110A), and a plurality of protruding portions (120, 120A) that protrudes from the flat plate, an interior of each protruding portion being a cavity (120X) that opens in an opposite direction to a protrusion direction, wherein at least one of an inner surface and an outer surface of the protruding portion is provided with a groove (125, 126) that serves as a deformation starting point when the protruding portion is compressed and deformed.

## Description

### BACKGROUND OF THE INVENTION

### Field of the Invention

The present invention relates to a cushioning sheet.

### Description of the Related Art

A cushioning sheet has been known that is placed between a base and an item to be loaded on the base so as to suppress the transmission of vibration to the item loaded on the base. This cushioning sheet is made of an elastic body and generates an elastic reaction force against the load acting from the item. Taking advantage of such properties, cushioning sheets have been used in recent years to suppress the deterioration of cells such as lithium-ion batteries. For example, the problem with lithium-ion batteries is that needle-shaped crystals (dendrites) of lithium metal are generated in repeated charging and discharging of the batteries. Continuous growth of such crystals results in a short circuit between the positive electrode and negative electrode. In addition, it is known that in all-solid-state batteries, variations in surface pressure due to expansion and contraction cause variations in performance and also affect the battery life. Therefore, measures have been taken to suppress cell expansion by applying an appropriate force to the cell, or to mechanically suppress the growth of the crystals in lithium-ion batteries.

In order to generate the desired reaction force in a cushioning sheet, the cushioning sheet needs to be compressed to set a compression amount to be within a predetermined range. In the case of a flat cushioning sheet, the reaction force increases rapidly as the compression amount increases.

Accordingly, it is known to provide a plurality of protruding portions, but even in this case, there is a limit to suppressing the rapid increase in reaction force that occurs with an increase in the compression amount, so it is also known to make the inside of the protruding portions hollow. However, with such techniques, the protruding portions may not maintain the desired orientation when compressed, hence the desired reaction force may not be generated. The related technique is described in Japanese Patent No. 7165760.

### SUMMARY OF THE INVENTION

The present invention provides a cushioning sheet that can generate a stable reaction force.

The present invention employs the following means to solve the above problems.

That is, the cushioning sheet of the present invention having an elastic body, the cushioning sheet comprising
a flat plate, and
a plurality of protruding portions that protrudes from the flat plate, an interior of each protruding portion being a cavity that opens in the opposite direction to a protrusion direction, wherein
at least one of an inner surface and an outer surface of the protruding portion is provided with a groove that serves as a deformation starting point when the protruding portion is compressed and deformed.

According to the present invention, when the protruding portion is compressed and deformed, the deformation starts from the groove, so that it is possible to stabilize the orientation when the protruding portion is deformed by compression.

The protruding portion may include
a pair of flat plate-shaped portions in which a distance between opposing surfaces thereof decreases toward tips in the protrusion direction, and
a curved plate-shaped portion that connects the tips of the pair of flat plate-shaped portions, and
the groove may be provided in the flat plate-shaped portions.

By adopting such a configuration, the orientation of the protruding portion that is deformed by compression can be stabilized more reliably.

The protruding portion may include a side part having two pairs of flat plate-shaped portions in which a distance between opposing surfaces thereof decreases toward the tips in the protrusion direction, and a curved plate-shaped portion that connects the tips of the two pairs of flat plate-shaped portions, and
the groove may be provided along an entire circumference of the side part.

By adopting such a configuration, the orientation of the protruding portion that is deformed by compression can be stabilized more reliably.

The groove may be provided so as to extend parallel to the flat plate.

This prevents the protruding portion from tilting relative to the flat plate when the protruding portion is compressed.

The groove may be provided on the inner surface within a range from a center position of a length of the flat plate-shaped portions in the protrusion direction to the flat plate.

The groove may be provided on the outer surface within a range from a center position of a length of the flat plate-shaped portions in the protrusion direction to the flat plate.

The above features may be combined to the extent possible.

As described above, according to the present invention, a reaction force can be generated stably.

### BRIEF DESCRIPTION OF THE DRAWINGS

FIGS. 1A and 1B are schematic drawings showing an application example of a cushioning sheet according to Embodiment 1 of the present invention;
FIG. 2 is a plan view of the cushioning sheet according to Embodiment 1 of the present invention;
FIGS. 3A and 3B are side views of the cushioning sheet according to Embodiment 1 of the present invention;
FIGS. 4A and 4B are schematic cross-sectional views of the cushioning sheet according to Embodiment 1 of the present invention;
FIGS. 5A to 5D are explanatory drawings of protruding portions according to Embodiment 1 of the present invention;
FIGS. 6A to 6G are explanatory drawings of protruding portions according to Example 1 of the present invention;
FIGS. 7A to 7F are explanatory drawings of protruding portions according to Example 1 of the present invention;
FIG. 8 is an explanatory drawing relating to protruding portions according to Example 1 of the present invention;
FIGS. 9A to 9G are explanatory drawings of protruding portions according to Example 2 of the present invention;
FIGS. 10A to 10G are explanatory drawings of protruding portions according to Example 2 of the present invention;
FIGS. 11 is an explanatory drawing relating to protruding portions according to Example 2 of the present invention; and
FIGS. 12A and 12B are external views of the cushioning sheet according to Embodiment 2 of the present invention.

### DESCRIPTION OF THE EMBODIMENTS

A mode for carrying out the present invention will be described hereinbelow in detail based on the embodiments and examples with reference to the drawings. However, the dimensions, materials, shapes, relative positions, etc. of the components described in the examples are not intended to limit the scope of the present invention unless otherwise specified.

### Embodiment 1

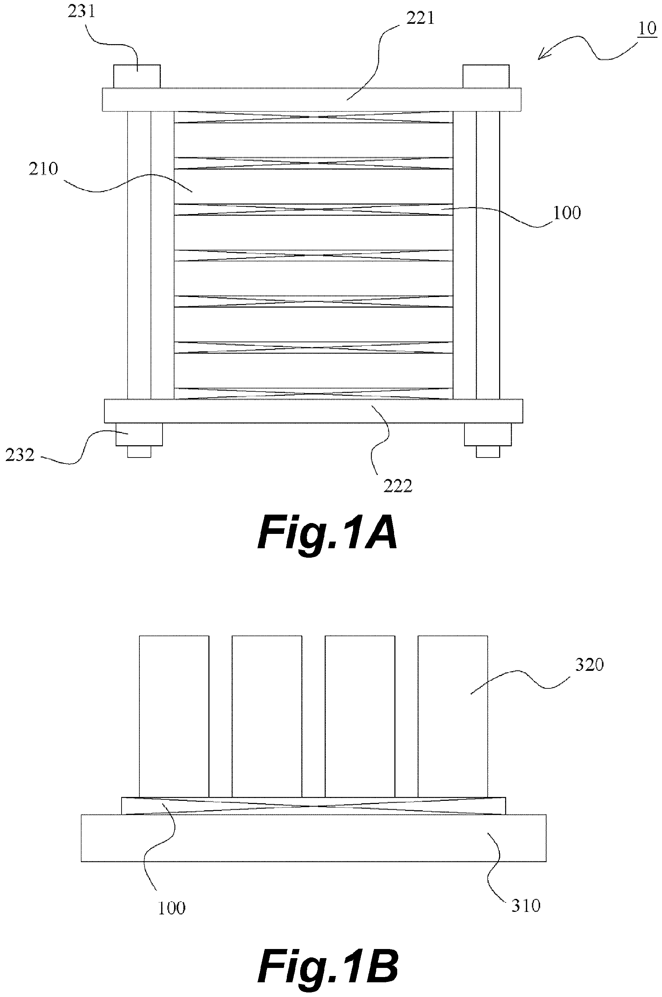

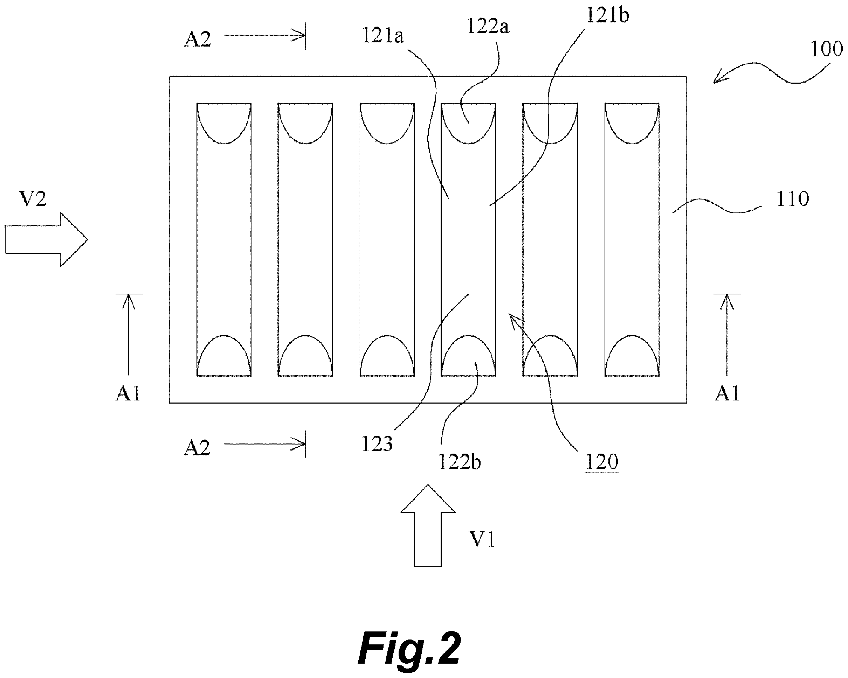

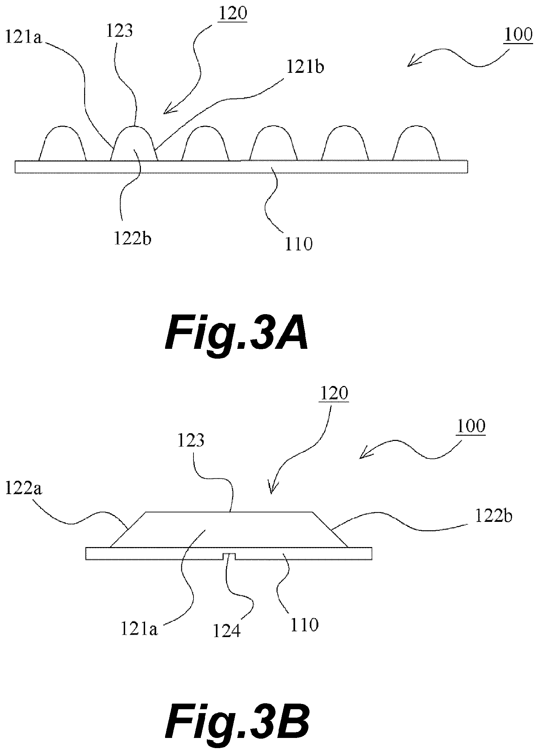

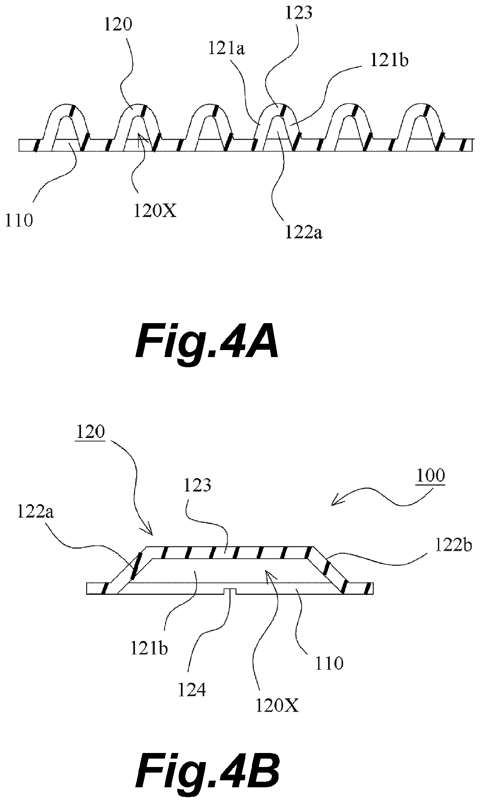

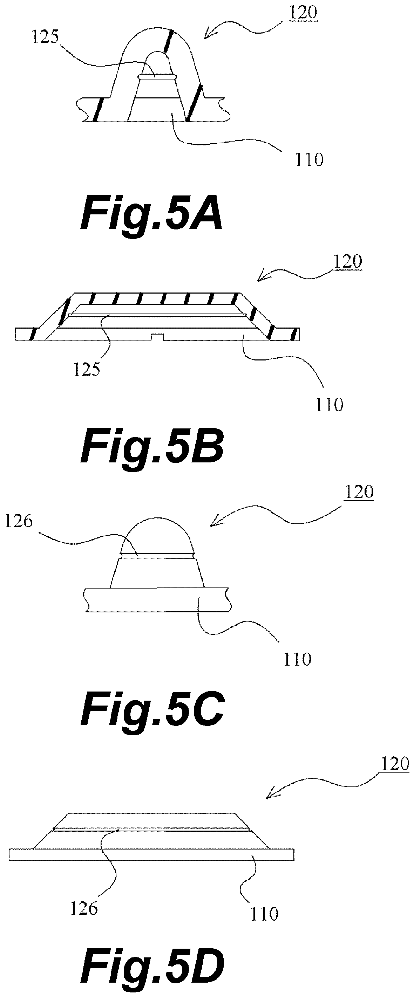

The cushioning sheet according to Embodiment 1 of the present invention will be described with reference to FIGS. 1A and 1B to 5A to 5D. FIG. 1A and 1B are schematic drawings showing an application example of the cushioning sheet according to Embodiment 1 of the present invention. FIG. 2 is a plan view of the cushioning sheet according to Embodiment 1 of the present invention. FIG. 3A and 3B are side views of the cushioning sheet according to Embodiment 1 of the present invention, where FIG. 3A is a view seen in the V1 direction in FIG. 2, and FIG. 3B is a view seen in the V2 direction in FIG. 2. FIGS. 4A and 4B are schematic cross-sectional views of the cushioning sheet according to Embodiment 1 of the present invention, where FIG. 4A is a cross-sectional view taken along the A1-A1 line in FIG. 2, and FIG. 4B is a cross-sectional view taken along the A2-A2 line in FIG. 2. FIG. 5A to 5D are explanatory drawings of the protruding portion according to Embodiment 1 of the present invention.

### Application Example of Cushioning Sheet

An application example of a cushioning sheet 100 will be described with reference to FIGS. 1A and 1B. FIG. 1A illustrates a case where the cushioning sheet 100 is applied to a battery 10. The battery 10 has a cell stack in which a plurality of unit cells 210 is stacked. The cell stack is compressed by a pair of clamping plates 221 and 222. The pair of clamping plates 221 and 222 are fastened by bolts 231 and nuts 232, so that a predetermined compressive force acts on the cell stack. In the battery 10 according to this embodiment, a cushioning sheet 100 is provided between the clamping plate 221 and the cell stack, between adjacent unit cells 210, and between the cell stack and the clamping plate 222. This allows an appropriate pressing force to be applied to each unit cell 210 even when the unit cell 210 expands and contracts due to charging and discharging. This prevents the battery 10 from deteriorating and extends the service life of the battery 10.

FIG. 1B shows a configuration in which a cushioning sheet 100 is provided between a base 310 and an item 320. This prevents the transmission of vibration to the item 320 even if the base 310 vibrates. In addition, even if the base 310 receives an impact, the impact is absorbed by the cushioning sheet 100, so that the item 320 can be protected from the impact.

### Cushioning Sheet

The cushioning sheet 100 according to this embodiment will be described with reference to FIGS. 2 to 5A to 5D. The cushioning sheet 100 has an elastic body and can be configured of an elastomer material (e.g., rubber). The cushioning sheet 100 has a flat plate 110 and a plurality of protruding portions 120 protruding from the flat plate 110. In the example shown in FIG. 2, the plurality of protruding portions 120 are provided in six locations so as to be aligned in a row at equal intervals, but the arrangement and number of the protruding portions 120 are not particularly limited and may be set according to the overall dimensions and shape of the cushioning sheet 100 and the environment in which the cushioning sheet is to be used. Each protruding portion 120 is configured so that interior thereof is a cavity that opens in the opposite direction to the protrusion direction (see a cavity 120X in FIGS. 4A and 4B).

The opening in the cavity 120X of the cushioning sheet 100 configured as described above may be blocked by a member arranged on the opposite side to the protrusion direction of the protruding portion 120 depending on the usage environment, and the cavity 120X may become a sealed space. In this case, when the protruding portion 120 is compressed, the air in the cavity cannot escape to the outside, and the reaction force becomes higher than expected. Therefore, depending on the usage environment, a communication groove 124 may be provided on the bottom surface of the flat plate 110 to connect the space of the cavity 120X with the outside space. This prevents the cavity 120X from becoming a sealed space. However, where a passage for releasing the air in the cavity is formed on a member arranged on the opposite side to the protrusion direction of the protruding portion 120, it is not necessary to provide the abovementioned communication groove 124. The communication groove 124 may not needed when the cavity 120X becoming a sealed space is not a problem.

The protruding portion 120 according to this embodiment includes a side part having two pairs of flat plate-shaped portions in which the distance between the opposing surfaces decreases toward the tips in the protrusion direction, and a curved plate-shaped portion 123 that connects the tips of the two pairs of flat plate-shaped portions. The side part has a pair of flat plate-shaped portions 121a and 121b extending in the longitudinal direction and a pair of flat plate-shaped portions 122a and 122b extending in the lateral direction.

In the cushioning sheet 100 according to the present embodiment, at least one of the inner surface and the outer surface of the protruding portion 120 is provided with a groove that serves as a deformation starting point when the protruding portion 120 is compressed and deformed. The groove may be provided around the entire circumference of the side part of the protruding portion 120. In other words, the groove may be provided in the pair of flat plate-shaped portions 121a and 121b and the pair of flat plate-shaped portions 122a and 122b. This feature will be described in more detail with reference to FIGS. 5A to 5D. The grooves are omitted in FIGS. 2 to 4A and 4B.

FIGS. 5A and 5B are cross-sectional views illustrating the protruding portion 120 in which a groove 125 is provided on the inner surface thereof. FIG. 5A corresponds to a cross-sectional view of the protruding portion 120 in FIG. 4A in an enlarged scale, and FIG. 5B corresponds to a view of FIG. 4B in which the groove 125 is clearly shown. As shown in these figures, the groove 125 is provided around the entire circumference of the inner surface of the side part of the protruding portion 120. In other words, the groove 125 is provided so as to be continuously connected on the inner surfaces of the flat plate-shaped portions 121a, 121b, 122a, and 122b. The groove 125 is provided so as to extend parallel to the flat plate 110.

FIGS. 5C and 5D are side views illustrating the protruding portion 120 in which a groove 126 is provided on the outer surface of the protruding portion 120. FIG. 5C corresponds to a side view of the protruding portion 120 in FIG. 3A in an enlarged scale, and FIG. 5D corresponds to a view of FIG. 3B in which the groove 126 is clearly shown. As shown in these figures, the groove 126 is provided around the entire circumference of the outer surface of the side part of the protruding portion 120. In other words, the groove 126 is provided so as to be continuously connected on the outer surfaces of the flat plate-shaped portions 121a, 121b, 122a, and 122b. The groove 126 is provided so as to extend parallel to the flat plate 110.

### Advantages of Cushioning Sheet According to Present Embodiment

With the cushioning sheet 100 according to the present embodiment, when the protruding portion 120 is compressed and deformed, deformation starts from the grooves 125 and 126. Therefore, it is possible to stabilize the orientation of the protruding portion 120 when it is deformed by compression. That is, in the case of a protruding portion without a groove, the strength of each part of the protruding portion is almost the same, so the part where deformation starts may differ depending on the dimensional tolerance of the protruding portion and the state of the protruding portion at the time of compression, and the orientation at the time of compression may become unstable. In contrast, as in the present embodiment where the grooves 125 and 126 are provided, the strength of the parts where the grooves 125 and 126 are provided is lower than that of the other parts, so when the protruding portion 120 is compressed, deformation starts from the grooves 125 and 126. Therefore, the orientation of the protruding portion 120 when it is deformed by compression can be stabilized.

In the present embodiment, the grooves 125 and 126 are provided not in the curved plate-shaped portion 123 but in the flat plate-shaped portions 121a, 121b, 122a, and 122b. This makes it possible to more reliably stabilize the orientation of the protruding portion 120 when it is deformed by compression. The reason for this will be explained in the example shown below.

In addition, in the present embodiment, the grooves 125 and 126 are provided so as to extend parallel to the flat plate 110. This prevents the protruding portion 120 from tilting relative to the flat plate 110 when the protruding portion 120 is compressed. In the case of the application example of the cushioning sheet 100 described with reference to FIGS. 1A and 1B, it is desirable that the protruding portion 120 be compressed perpendicular to the flat plate 110. As described above, the grooves 125 and 126 extending parallel to the flat plate 110 prevent the protruding portion 120 from tilting relative to the flat plate 110 when the protruding portion 120 is compressed. Note that, depending on the application example of the cushioning sheet 100, where it is desirable that the protruding portion 120 be compressed so as to tilt relative to the flat plate 110, a configuration in which the groove is tilted relative to the flat plate 110 can also be adopted.

The protruding portion 120 has the following two functions.

The first one, as described hereinabove, is the stability of orientation when the protruding portion 120 is compressed. When a compressive force acts on the protruding portion 120 in an ideal direction (in the above example, a direction perpendicular to the flat plate 110), the orientation of the protruding portion 120 can be stabilized. However, depending on the usage environment, the compressive force acting on the protruding portion 120 may deviate from the ideal direction. Therefore, it is desirable that the orientation of the protruding portion 120 in the compressed state could be stabilized even in this case.

In addition, the compressive force acting on the protruding portion 120 varies depending on the usage environment. In a case where the reaction force when the protruding portion 120 is compressed changes greatly in an environment where the compression amount changes greatly, the functions of the cushioning sheet 100 may not be fully exerted. Therefore, as the second function, it is desirable that the change in the reaction force of the protruding portion 120 be small in response to the change in the compression amount of the protruding portion 120. In a case where this change in the reaction force is small, the cushioning sheet 100 can be applied in different usage environments, which also increases versatility.

The above two functions are influenced by various parameters. However, the inventors of the present application have found that the above two functions are largely dependent on the arrangement positions of the grooves 125 and 126. The verification results obtained for different arrangement positions of the grooves 125 and 126 will be explained with reference to the following Examples 1 and 2. Example 1 relates to a configuration in which the groove 125 is provided on the inner surface of the protruding portion 120, and Example 2 relates to a configuration in which the groove 126 is provided on the outer surface of the protruding portion 120.

### Example 1

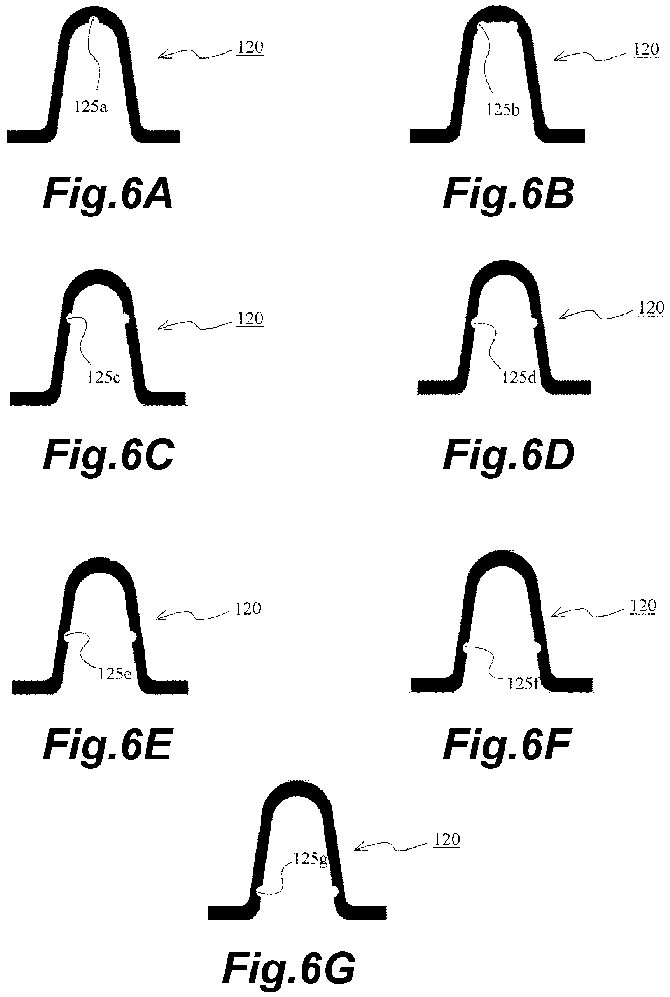

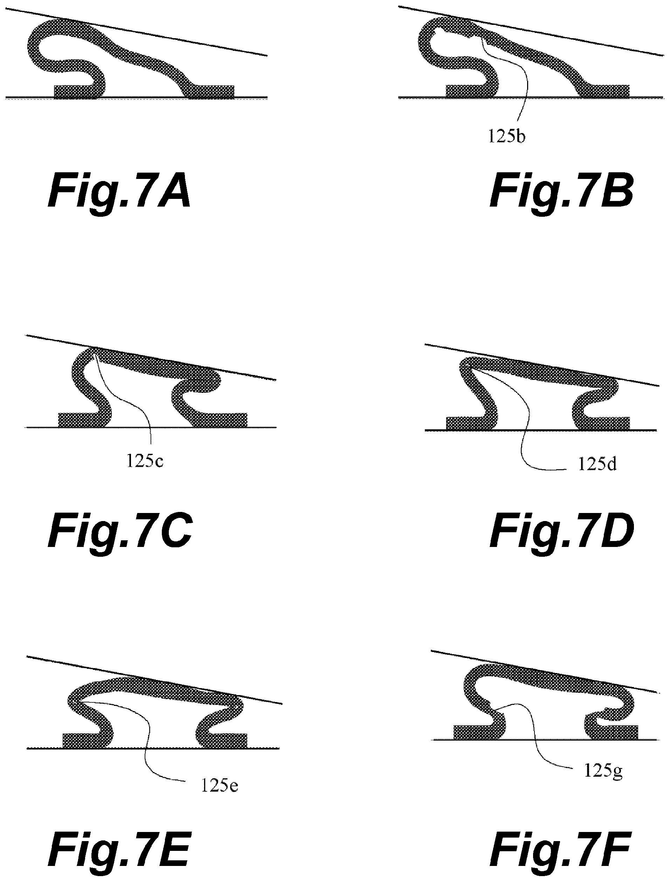

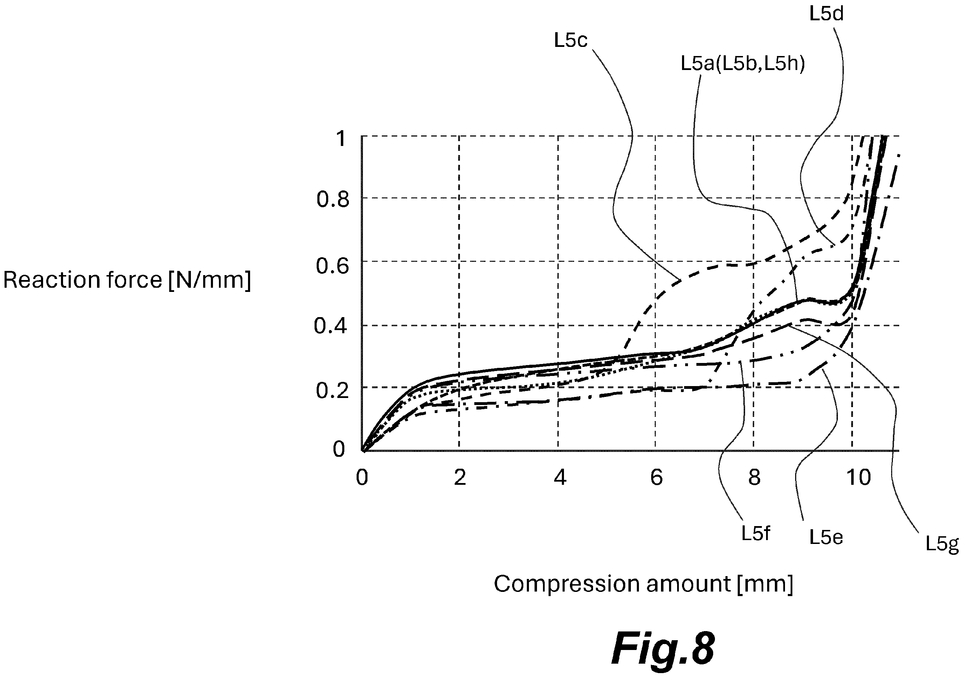

The configurations of the protruding portions according to Example 1 of the present invention will be explained with reference to FIGS. 6A to 6G to 8. FIGS. 6A to 6G to 8 are explanatory drawings of the protruding portions according to Example 1 of the present invention. FIGS. 6A to 6G are schematic cross-sectional views showing the state of the protruding portions when no compressive force is applied. FIGS. 7A to 7F are schematic cross-sectional views showing the state of the protruding portions when a compressive force is applied obliquely. FIG. 8 is a graph showing the relationship between the compression amount of the protruding portions and the reaction force.

FIGS. 6A and 6B show the configurations of the protruding portions 120 described in the above embodiment when a groove is provided on the inner surface of the curved plate-shaped portion 123. Hereinafter, these are referred to as Configuration 1 and Configuration 2, respectively. In Configuration 1, a linear groove 125a is provided at the very tip (top end in the figure) of the inner surface of the curved plate-shaped portion 123, so as to run along the pair of flat plate-shaped portions 121a and 121b. In Configuration 2, an annular groove 125b is provided near the base (near the bottom end in the figure) of the inner surface of the curved plate-shaped portion 123, so as to run along the pair of flat plate-shaped portions 121a and 121b and the pair of flat plate-shaped portions 122a and 122b.

FIGS. 6C, 6D, 6E, 6F, and 6G show the configurations of the protruding portions 120 described in the above embodiment, in which the groove 125 is provided so as to be continuously connected on the inner surfaces of the flat plate-shaped portions 121a, 121b, 122a, and 122b. Hereinafter, these are referred to as Configuration 3, Configuration 4, Configuration 5, Configuration 6, and Configuration 7, respectively. In Configuration 3, a groove 125c is provided on the inner surfaces of the flat plate-shaped portions near the tips (upper ends in the figure) of the flat plate-shaped portions in the protrusion direction. In Configuration 4, a groove 125d is provided on the inner surfaces of the flat plate-shaped portions at a position between the center position along the length of the flat plate-shaped portions in the protrusion direction and the tip in the protrusion direction. In Configuration 5, a groove 125e is provided on the inner surfaces of the flat plate-shaped portions at the center position along the length of the flat plate-shaped portions in the protrusion direction. In Configuration 6, a groove 125f is provided on the inner surfaces of the flat plate-shaped portions at a position between the center position along the length of the flat plate-shaped portions in the protrusion direction and the boundary with the flat plate 110. In Configuration 7, a groove 125g is provided on the inner surfaces of the flat plate-shaped portions near the boundary with the flat plate 110.

FIGS. 7A to 7F show the state of the protruding portions 120 when a compressive force acts obliquely on the protruding portions 120. FIG. 7A shows, as a reference example, the state of the protruding portion 120 when the groove 125 is not provided. FIG. 7B illustrates Configuration 2, FIG. 7C illustrates Configuration 3, FIG. 7D illustrates Configuration 4, FIG. 7E illustrates Configuration 5, and FIG. 7F illustrates Configuration 7. From these figures, it can be understood that when the groove 125 is not provided and when the groove 125 is provided on the inner surface of the curved plate-shaped portion 123, where a compressive force acts obliquely, the protruding portion 120 is greatly deformed and orientation thereof becomes unstable. Also, in the case of Configuration 2, it is understood that the protruding portion 120 is in a slightly buckled state. In the other examples, it is understood that even if a compressive force acts obliquely, the protruding portion 120 can be prevented from being greatly deformed and the orientation of the protruding portion 120 can be stabilized. Although the case of Configuration 1 is not specifically illustrated, the protruding portion behaves in the same manner as in FIGS. 7A and 7B. Although the case of Configuration 6 is also not specifically illustrated, it is understood that the state is intermediate between that in FIG. 7E and that in FIG. 7F. From the above, it can be understood that, of the two desired functions of the protruding portion 120 described above, the first function can be achieved by providing the groove 125 in the flat plate-shaped portions, but it is better to avoid a position near the tips of the flat plate-shaped portions in the protrusion direction.

FIG. 8 shows the relationship between the compression amount of the protruding portion and the reaction force. Graphs L5a, L5b, L5c, L5d, L5e, L5f, and L5g in the figure correspond to Configurations 1, 2, 3, 4, 5, 6, and 7, respectively. In addition, graph L5h relates to a configuration (reference example) in which the groove 125 is not provided in the protruding portion 120. From these graphs, it can be understood that the same relationship is shown in Configurations 1 and 2. It is also confirmed that the reference example without the groove shows the same relationship as with Configuration 1 and Configuration 2. It is also understood that the range of compression amount in which the reaction force does not change much can be widened, particularly in Configurations 5, 6, and 7. From the above, it can be understood that, for the second of the two desired functions of the protruding portion 120 described above, the groove 125 may be provided within a range from the center position along the length of the flat plate-shaped portions in the protrusion direction to the flat plate 110.

### Example 2

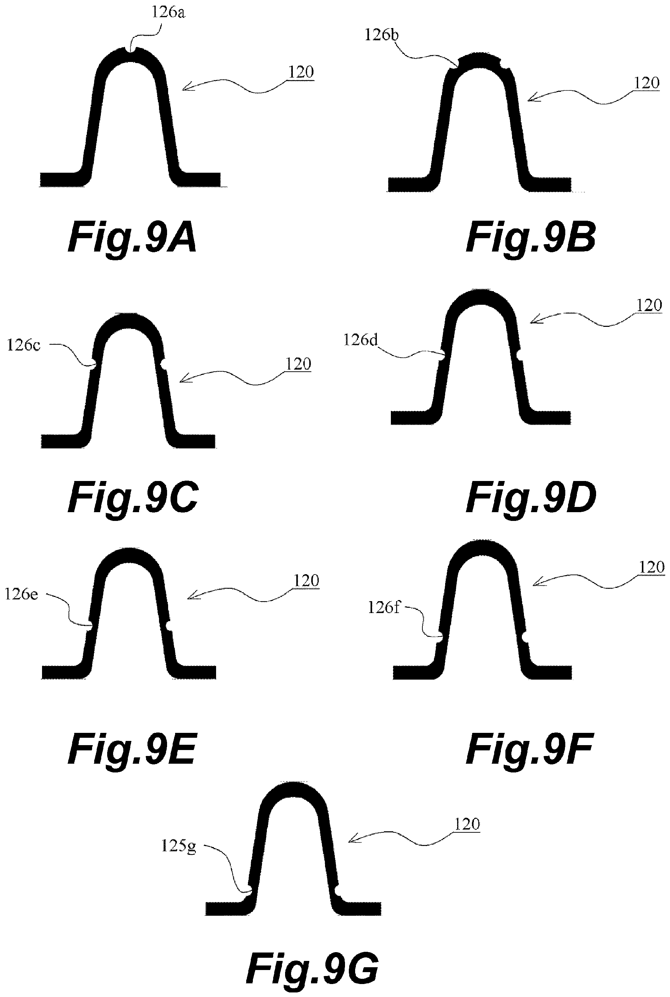

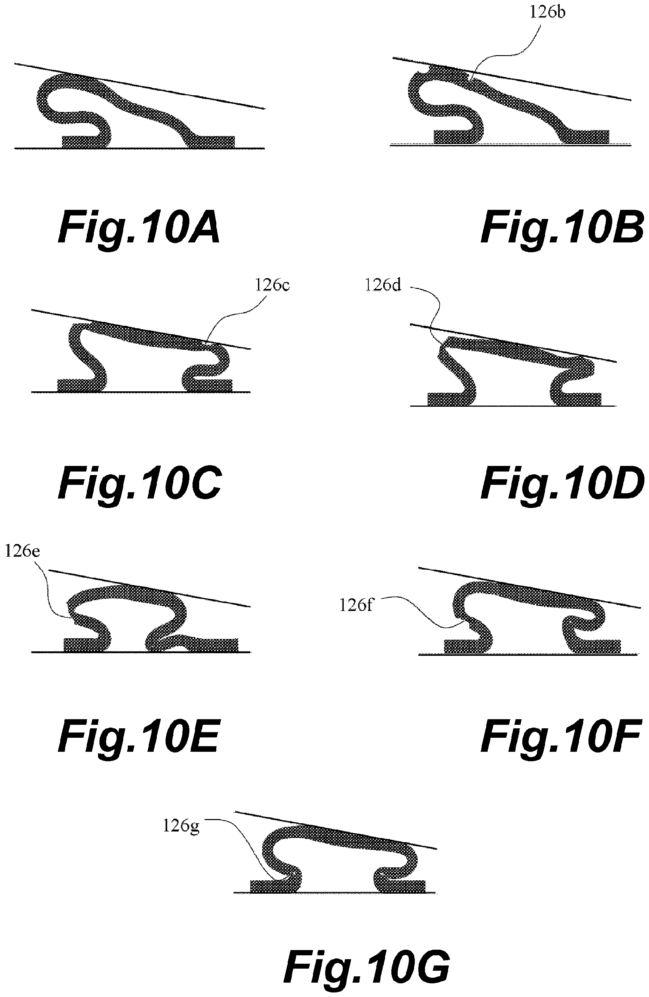

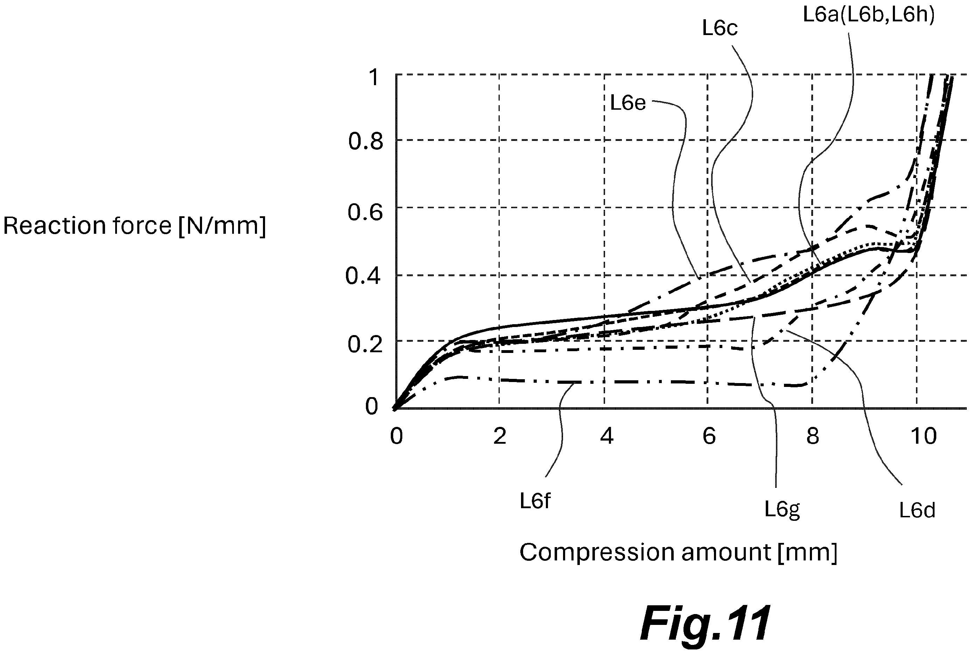

The configurations of the protruding portions according to Example 2 of the present invention will be explained with reference to FIGS. 9A to 9G to 11. FIGS. 9A to 9G to 11 are explanatory drawings of the protruding portions according to Example 2 of the present invention. FIGS. 9A to 9G are schematic cross-sectional views showing the state of the protruding portions when no compressive force is applied. FIGS. 10A to 10G are schematic cross-sectional views showing the state of the protruding portions when a compressive force is applied obliquely. FIG. 11 is a graph showing the relationship between the compression amount of the protruding portions and the reaction force.

FIGS. 9A and 9B show the configurations of the protruding portions 120 described in the above embodiment when a groove is provided on the outer surface of the curved plate-shaped portion 123. Hereinafter, these are referred to as Configuration 1 and Configuration 2, respectively. In Configuration 1, a linear groove 126a is provided at the very tip (top end in the figure) of the outer surface of the curved plate-shaped portion 123, so as to run along the pair of flat plate-shaped portions 121a and 121b. In Configuration 2, an annular groove 126b is provided near the base (near the bottom end in the figure) of the outer surface of the curved plate-shaped portion 123, so as to run along the pair of flat plate-shaped portions 121a and 121b and the pair of flat plate-shaped portions 122a and 122b.

FIGS. 9C, 9D, 9E, 9F, and 9G show the configurations of the protruding portions 120 described in the above embodiment, in which the groove 126 is provided so as to be continuously connected on the outer surfaces of the flat plate-shaped portions 121a, 121b, 122a, and 122b. Hereinafter, these are referred to as Configuration 3, Configuration 4, Configuration 5, Configuration 6, and Configuration 7, respectively. In Configuration 3, a groove 126c is provided on the outer surfaces of the flat plate-shaped portions near the tips (upper ends in the figure) of the flat plate-shaped portions in the protrusion direction. In Configuration 4, a groove 126d is provided on the outer surfaces of the flat plate-shaped portions at a position between the center position along the length of the flat plate-shaped portions in the protrusion direction and the tip in the protrusion direction. In Configuration 5, a groove 126e is provided on the outer surfaces of the flat plate-shaped portions at the center position along the length of the flat plate-shaped portions in the protrusion direction. In Configuration 6, a groove 126f is provided on the outer surfaces of the flat plate-shaped portions at a position between the center position along the length of the flat plate-shaped portions in the protrusion direction and the boundary with the flat plate 110. In Configuration 7, a groove 126g is provided on the outer surfaces of the flat plate-shaped portions near the boundary with the flat plate 110.

FIGS. 10A to 10G show the state of the protruding portions 120 when a compressive force acts obliquely on the protruding portions 120. FIG. 10A shows, as a reference example, the state of the protruding portion 120 when the groove 126 is not provided. FIG. 10B illustrates Configuration 2, FIG. 10C illustrates Configuration 3, FIG. 10D illustrates Configuration 4, FIG. 10E illustrates Configuration 5, FIG. 10F illustrates Configuration 6, and FIG. 10G illustrates Configuration 7. From these figures, it can be understood that when the groove 126 is not provided and when the groove 126 is provided on the outer surface of the curved plate-shaped portion 123, where a compressive force acts obliquely, the protruding portion 120 is greatly deformed and orientation thereof becomes unstable. Also, in the case of Configuration 5, it is understood that slight buckling occurs. In the other examples, it is understood that even if a compressive force acts obliquely, the protruding portion 120 can be prevented from being greatly deformed and the orientation of the protruding portion 120 can be stabilized. Although the case of Configuration 1 is not specifically illustrated, the protruding portion behaves in the same manner as in FIGS. 10A and 10B. From the above, it can be understood that, of the two desired functions of the protruding portion 120 described above, the first function can be achieved by providing the groove 126 in the flat plate-shaped portions, but it is better to avoid the center position along the length of the flat plate-shaped portions in the protrusion direction.

FIG. 11 shows the relationship between the compression amount of the protruding portion and the reaction force. Graphs L6a, L6b, L6c, L6d, L6e, L6f, and L6g in the figure correspond to Configurations 1, 2, 3, 4, 5, 6, and 7, respectively. In addition, graph L6h relates to a configuration (reference example) in which the groove 126 is not provided in the protruding portion 120. From these graphs, it can be understood that the same relationship is shown in Configurations 1 and 2. It is also confirmed that the reference example without the groove shows the same relationship as in Configuration 1 and Configuration 2. It is also understood that the range of compression amount in which the reaction force does not change much can be widened, particularly in Configurations 6 and 7. From the above, it can be understood that, for the second of the two desired functions of the protruding portion 120 described above, the groove 126 may be provided within a range from the center position along the length of the flat plate-shaped portions in the protrusion direction to the flat plate 110.

### Embodiment 2

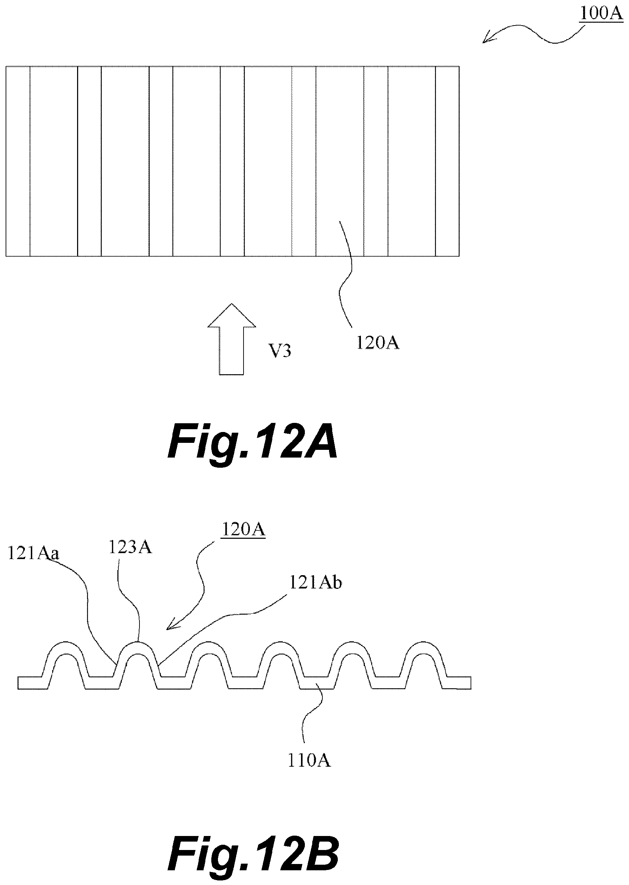

The cushioning sheet according to Embodiment 2 of the present invention will be described with reference to FIGS. 12A and 12B. FIGS. 12A and 12B are external views of the cushioning sheet according to Embodiment 2 of the present invention, where FIG. 12A is a plan view and FIG. 12B is a side view (view seen in the V3 direction in FIG. 12A).

A cushioning sheet 100A according to the present embodiment can also be applied to the battery 10 or placed between a base 310 and an item 320 as described in Embodiment 1 with reference to FIGS. 1A to 1B.

The cushioning sheet 100A according to the present embodiment has an elastic body and can be configured of an elastomer material (e.g., rubber). The cushioning sheet 100A has a flat plate 110A and a plurality of protruding portions 120A protruding from the flat plate 110A. In the example shown in the figure, the plurality of protruding portions 120A are provided in six locations so as to be aligned in a row at equal intervals, but the arrangement and number of the protruding portions 120A are not particularly limited and may be set according to the overall dimensions and shape of the cushioning sheet 100A and the environment in which the cushioning sheet is used. Each protruding portion 120A is configured so that the interior thereof is a cavity that opens in the opposite direction to the protrusion direction. The internal cavities of the protruding portions 120A of the cushioning sheet 100A according to the present embodiment are also open to the sides, so that in the above-mentioned application example, the cavities do not become sealed spaces.

The protruding portion 120A according to the present embodiment is composed of a pair of flat plate-shaped portions 121Aa and 121Ab in which the distance between the opposing surfaces decreases toward the tips in the protrusion direction, and a curved plate-shaped portion 123A connecting the tips of the pair of flat plate-shaped portions 121Aa and 121Ab.

In the cushioning sheet 100A configured as above, a groove that serves as a deformation starting point when the protruding portion 120A is compressed and deformed can be provided on at least one of the inner surface and the outer surface of the protruding portion 120A, as in the above-described Embodiment 1. In the present embodiment, a linear groove may be provided on at least one of the inner surfaces and the outer surfaces of the pair of flat plate-shaped portions 121Aa and 121Ab. The configuration and arrangement of the grooves are as described in Examples 1 and 2, so the description thereof will be omitted.

By adopting the above configurations, it is possible to obtain the same effects as in Embodiment 1 and Examples 1 and 2.

### Other

In the above examples, the groove that serves as a deformation starting point when the protruding portion is compressed is provided only on the inner or outer surface of the protruding portion, but it is also possible to adopt a configuration in which grooves are provided on both the inner and outer surfaces. Also, in the above examples, one groove is provided on the inner surface and one groove is provided on the outer surface, but two or more grooves may be provided on the inner surface, and two or more grooves may be provided on the outer surface.

## Claims

1. A cushioning sheet having an elastic body, the cushioning sheet comprising:
a flat plate, and
a plurality of protruding portions that protrudes from the flat plate, an interior of each protruding portion being a cavity that opens in an opposite direction to a protrusion direction, wherein
at least one of an inner surface and an outer surface of the protruding portion is provided with a groove that serves as a deformation starting point when the protruding portion is compressed and deformed.

2. The cushioning sheet according to claim 1, wherein
the protruding portion includes
a pair of flat plate-shaped portions in which a distance between opposing surfaces thereof decreases toward tips in the protrusion direction, and
a curved plate-shaped portion that connects the tips of the pair of flat plate-shaped portions, and
the groove is provided in the flat plate-shaped portions.

3. The cushioning sheet according to claim 1, wherein
the protruding portion includes a side part having two pairs of flat plate-shaped portions in which a distance between opposing surfaces thereof decreases toward tips in the protrusion direction, and a curved plate-shaped portion that connects the tips of the two pairs of flat plate-shaped portions, and
the groove is provided along an entire circumference of the side part.

4. The cushioning sheet according to claim 2 or 3, wherein
the groove is provided so as to extend parallel to the flat plate.

5. The cushioning sheet according to claim 4, wherein
the groove is provided on the inner surface within a range from a center position of a length of the flat plate-shaped portions in the protrusion direction to the flat plate.

6. The cushioning sheet according to claim 4, wherein
the groove is provided on the outer surface within a range from a center position of a length of the flat plate-shaped portions in the protrusion direction to the flat plate.
